# FASCICULE DE BREVET EUROPEEN

(11) **EP 3 055 147 B1**
(45) Date de publication et mention de la délivrance du brevet: **26.02.2020**
(21) Numéro de dépôt: 14793239.6
(22) Date de dépôt: 06.10.2014
(51) Int. Cl.: B60H 3/02, F24F 6/14, F24F 13/078, B60H 1/00

(54) **DISPOSITIF DE TRAITEMENT D'AIR POUR DÉLIVRER DE L'AIR AVEC DES PETITES GOUTTES DE LIQUIDE ET ÉCLAIRÉ EN FONCTION D'AU MOINS UNE INFORMATION D'UN SYSTÈME**
LUFTBEHANDLUNGSVORRICHTUNG ZUR ZUFUHR VON LUFT MIT KLEINEN FLÜSSIGKEITSTROPFEN UND ZUR BELEUCHTUNG GEMÄSS MINDESTENS EINER INFORMATION AUS EINEM SYSTEM
AIR TREATMENT DEVICE FOR SUPPLYING AIR CONTAINING SMALL DROPS OF LIQUID AND ILLUMINATED ACCORDING TO AT LEAST ONE PIECE OF INFORMATION FROM A SYSTEM

(30) Priorité: 09.10.2013 FR 1359798
(43) Date de publication de la demande: 17.08.2016
(73) Titulaire: PSA Automobiles SA, 78300 Poissy (FR)
(72) Inventeur: KHODEIR, Oussama, F-75012 Paris (FR); ROUSSEAU, Frederic, F-91410 Dourdan (FR); COPEL, Johan, F-94140 Alfortville (FR); PINTAT, Bruno, F-92140 Clamart (FR); KERVAREC, Florian, F-91310 Longpont Sur Orge (FR)
(86) Numéro de dépôt international: PCT/FR2014/052522
(87) Numéro de publication internationale: WO 2015/052418

(56) Documents cités:
- EP-A1- 2 204 623
- EP-A1- 2 607 799
- WO-A1-01/51001
- FR-A1- 2 850 303
- FR-A1- 2 971 944
- GB-A- 2 220 278
- US-A1- 2007 046 452
- US-A1- 2012 019 784

## Description

L'invention concerne les dispositifs qui sont destinés à traiter de l'air devant alimenter l'habitacle d'un véhicule.

Comme le sait l'homme de l'art, certains dispositifs de traitement d'air, destinés à alimenter en air traité une enceinte d'un système, comprennent des moyens de production qui sont chargés de produire pour cette enceinte un flux d'air traité par adjonction de petites gouttes de liquide, et une source de lumière qui est chargée d'éclairer une partie au moins de ce flux d'air traité dans l'enceinte. Ces petites gouttes sont généralement crées par transformation d'un liquide par nébulisation, brumisation ou pulvérisation.

Notamment, le document FR2971944 divulgue un dispositif est dédié au traitement d'un air destiné à une enceinte. Le dispositif comprend des moyens de nébulisation propres à produire des gouttes très petites à partir d'un liquide, des moyens de production propres à générer un flux d'air, un conduit principal propre à canaliser une partie au moins du flux d'air généré et les gouttes produites jusqu'à une sortie communiquant avec l'enceinte, et des moyens de diffusion propres à diffuser un produit volatil dans le conduit principal afin qu'il soit entraîné vers la sortie par le flux d'air généré. Le document US2007046452 divulgue un véhicule possédant un habitacle, comprenant en outre un dispositif de traitement d'air, ledit dispositif comprenant une source de lumière propre à éclairer les buses de sortie d'air dans les habitacles, ladite source de lumière étant apte à délivrer des photons définissant une image contenant une information relative au véhicule.

L'éclairage n'assure qu'un effet esthétique (ou de style) par interaction des photons avec les petites gouttes de liquide, et donc la source de lumière n'est destinée qu'à créer une ambiance lumineuse.

L'invention a donc pour but de conférer à la source de lumière au moins une fonction d'information, non exclusive de celle consistant à créer une ambiance lumineuse.

L'invention a donc pour objet un véhicule possédant un habitacle, comprenant au moins un dispositif de traitement d'air, ledit dispositif comprenant une source de lumière propre à éclairer les buses de sortie d'air dans l'habitacle, ladite source de lumière étant aptes à délivrer des photons contenant définissant une image contenant une information relative au véhicule, ledit dispositif étant caractérisé en ce qu'il comprend des moyens de production propres à produire pour ledit habitacle un flux d'air traité par adjonction de petites gouttes de liquide, et une source de lumière propre à éclairer une partie au moins dudit flux d'air traité dans ledit habitacle.

La source de lumière sert ainsi à fournir aux personnes présentes dans l'enceinte, par interaction avec les petites gouttes de liquide, au moins une information relative à l'air ambiant et/ou au système, éventuellement en complément de la participation à la création d'une ambiance lumineuse.

Le dispositif de traitement d'air selon l'invention peut comporter d'autres caractéristiques qui peuvent être prises séparément ou en combinaison, et notamment :
- l'image peut contenir au moins une information choisie parmi (au moins) un paramètre climatique de l'enceinte, un nombre de kilomètres restant à parcourir (lorsque le système est un véhicule), une date et un horaire ;
- chaque paramètre peut être choisi parmi (au moins) un degré d'humidité dans l'enceinte et une température dans l'enceinte ;
- dans un premier mode de réalisation, il peut comprendre au moins un aérateur propre à être couplé à une sortie d'alimentation de l'enceinte et comportant au moins une première partie de la source de lumière propre à délivrer des photons présentant la couleur représentative d'au moins un paramètre climatique de l'enceinte ;
   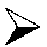 la première partie de sa source de lumière peut être installée dans une partie centrale de l'aérateur et/ou dans au moins une portion d'une partie périphérique de l'aérateur ;
   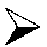 l'aérateur peut comprendre une partie périphérique munie d'une seconde partie de sa source de lumière propre à délivrer des photons définissant une image contenant chaque information représentative d'au moins un paramètre climatique de l'enceinte ;
- dans un second mode de réalisation, il peut comprendre au moins un aérateur propre à être couplé à une sortie d'alimentation de l'enceinte. Dans ce cas sa source de lumière peut être propre à être installée au voisinage de cet aérateur ;
- ses moyens de production peuvent être agencés pour transformer un liquide en petites gouttes au moyen d'une technique choisie parmi (au moins) la nébulisation, la brumisation et la pulvérisation.

D'autres caractéristiques et avantages de l'invention apparaîtront à l'examen de la description détaillée ci-après, et des dessins annexés, sur lesquels :
- la figure 1 illustre schématiquement, dans une vue en coupe, un premier exemple de réalisation d'un dispositif de traitement d'air selon l'invention fournissant de l'air traité à une partie d'un habitacle,
- la figure 2 illustre schématiquement, dans une vue en coupe, un deuxième exemple de réalisation d'un dispositif de traitement d'air selon l'invention fournissant de l'air traité à une partie d'un habitacle, et
- la figure 3 illustre schématiquement, dans une vue en coupe, un troisième exemple de réalisation d'un dispositif de traitement d'air selon l'invention fournissant de l'air traité à une partie d'un habitacle.

L'invention a notamment pour but de proposer un dispositif de traitement d'air D destiné à traiter un flux d'air devant alimenter une partie d'une enceinte H d'un système, par adjonction de petites gouttes de liquide.

On considère dans ce qui suit, suivant l'invention, que l'enceinte H est un habitacle de véhicule automobile, comme par exemple une voiture.

Par ailleurs, on considère dans ce qui suit, à titre d'exemple non limitatif, que le dispositif de traitement d'air D est destiné à être implanté dans un plafonnier PV solidarisé à un toit ou pavillon (éventuellement de type « ciélo ») d'un véhicule, afin de participer au confort thermique des passagers arrière et éventuellement centraux de ce véhicule (au moins). Mais l'invention n'est pas limitée à ce type d'implantation. Ainsi, un dispositif de traitement d'air D peut être également implanté dans une planche de bord d'un véhicule, dans une console centrale installée entre deux sièges d'un véhicule, dans un siège d'un véhicule, dans un mur ou un faux plafond d'un bâtiment, ou sur un montant de véranda, par exemple.

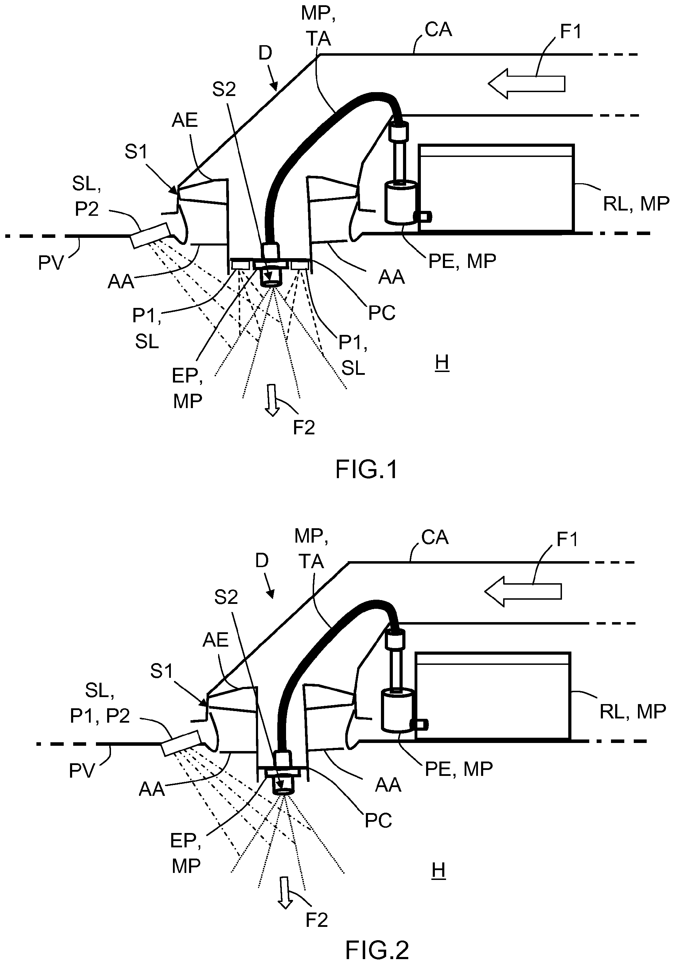

On a schématiquement représenté sur les figures 1 à 3 trois exemples de réalisation d'un dispositif de traitement d'air D selon l'invention. Comme illustré, un dispositif de traitement d'air D comprend au moins des moyens de production MP et une source de lumière SL.

Les moyens de production MP sont agencés de manière à produire pour l'enceinte H un flux d'air traité par adjonction de petites gouttes de liquide.

On entend ici par « flux d'air traité » un flux d'air ayant fait l'objet d'un rafraichissement par adjonction de (très) petites gouttes de liquide. On considère dans ce qui suit, à titre d'exemple non limitatif, que les moyens de production MP sont agencés de manière à produire des très petites gouttes de liquide au moyen d'une technique de nébulisation.

Il est rappelé que la nébulisation est une technique avantageuse du fait qu'elle permet de produire, sous la forme d'un «brouillard» ou d'une «brume», des gouttes de très petit diamètre (typiquement compris entre environ 2 µm et environ 5 µm) qui, une fois mélangées à un flux d'air, permettent à ce dernier de procurer une sensation de fraicheur à des passagers. Toute technique de nébulisation connue de l'homme de l'art, y compris miniaturisée, peut être ici utilisée. A titre d'exemple, il peut s'agir d'une technique par effet piézoélectrique, bien connue de l'homme de l'art. Cette technique peut, par exemple, utiliser au moins un oscillateur piézoélectrique (éventuellement miniaturisé), éventuellement couplé à une chambre de nébulisation, et vibrant à très haute fréquence lorsqu'il est alimenté en tension. Par exemple, dans le cas d'un nébuliseur ultrasonique, la surface vibrante est actionnée par des ultrasons (c'est-à-dire selon une fréquence supérieure à 20000 Hz).

Dans l'exemple non limitatif illustré, l'oscillateur piézoélectrique fait partie d'un élément EP de type piézoélectrique à membrane perforée qui est alimenté en liquide par un tuyau TA. Comme le sait l'homme de l'art, dans ce type d'élément EP l'oscillateur piézoélectrique miniaturisé fait vibrer une membrane perforée soit directement, soit indirectement. Dans la première hypothèse, la membrane perforée peut être entourée par l'oscillateur piézoélectrique miniaturisé et alimentée en liquide par une entrée qui est couplée au tuyau TA, et alimente une (seconde) sortie S2. Dans la seconde hypothèse, un conduit comprend une entrée couplée au tuyau TA et une (seconde) sortie S2 équipée de la membrane perforée, et l'oscillateur piézoélectrique miniaturisé est chargé de faire vibrer le conduit en amont de la seconde sortie S2.

Ce type d'élément EP constitue un nébuliseur compact produisant, sous la forme d'un brouillard ou d'une brume, des gouttes de (très) petit diamètre (typiquement compris entre environ 2 µm et environ 30 µm) qui, une fois mélangées à un flux d'air F1, permettent à ce dernier de procurer une sensation de fraicheur à des passagers. L'oscillateur piézoélectrique miniaturisé qui peut, par exemple, vibrer à environ 85 kHz en présence d'une puissance électrique d'environ 1,5 W, afin de faire vibrer la membrane perforée qui reçoit le liquide à nébuliser issu du tuyau TA. La membrane constitue une buse de nébulisation qui présente l'avantage de ne pas goutter lors de l'arrêt de l'alimentation du transducteur.

Par exemple, on peut utiliser un élément EP au moins partiellement similaire à celui fabriqué par la société AEROGEN sous le nom AERONEB® ou bien à celui fabriqué par la société PARI sous le nom EFLOW®Rapid Analyzer.

Les (très) petites gouttes produites sont délivrées sur la seconde sortie S2 afin d'être mélangées (ou adjointes) à un flux d'air à traiter circulant dans un conduit CA (flèche F1). Ce mélange d'air de (très) petites gouttes est matérialisé par la flèche F2 sur les figures 1 à 3.

On notera que dans les exemples non limitatifs illustrés sur les figures 1 à 3, la seconde sortie S2 est située au voisinage d'une première sortie S1 du conduit CA qui communique indirectement avec l'enceinte H. Les (très) petites gouttes qui débouchent de la seconde sortie S2 sont donc ici mélangées au flux d'air F1 (qui sort par la première sortie S1) dans l'habitacle H.

L'implantation de la seconde sortie S2 dans le voisinage immédiat de la première sortie S1 peut se concevoir d'au moins deux façons.

Une première façon est illustrée dans les premier et deuxième exemples de réalisation des figures 1 et 2. Dans ces premier et deuxième exemples, l'élément EP est logé dans le conduit CA avec sa seconde sortie S2 placée en aval, ou au niveau, de la première sortie S1. La notion d'aval doit être ici comprise par rapport au sens de circulation du flux d'air F1. En fait, comme illustré non limitativement sur les figures 1 et 2, l'élément EP est solidarisé à une pièce centrale PC d'un aérateur AE. Cette pièce centrale PC comprend une portion sensiblement creuse à cet effet. Les petites gouttes sont alors diffusées sensiblement dans l'axe de l'éventuel aérateur AE, ce qui permet d'optimiser le mélange air/liquide et de s'affranchir des risques de condensation.

On notera, comme illustré non limitativement, que cette pièce centrale PC peut éventuellement comprendre les ailettes AA précitées. Dans ce cas, la pièce centrale PC peut être éventuellement entraînée en rotation par un passager afin de permettre le réglage du débit et/ou de la direction.

Sur les figures 1 et 2 la seconde sortie S2 est placée en aval de la première sortie S1 mais elle pourrait être placée au niveau de cette dernière (S1).

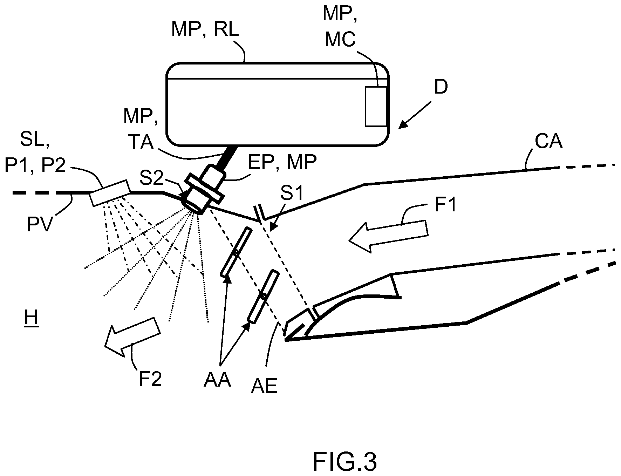

Une seconde façon est illustrée dans le troisième exemple de réalisation de la figure 3. Dans ce troisième exemple, l'élément EP est solidarisé au plafonnier PV et sa seconde sortie S2 est placée sensiblement à côté de la première sortie S1 et inclinée par rapport à cette dernière (S1).

Cette inclinaison est destinée à délivrer de façon optimale les petites gouttes dans le flux d'air F1 en aval de la première sortie S1. Elle est par exemple comprise entre environ 20° et environ 70°.

On notera, comme illustré non limitativement sur la figure 3, que le dispositif de traitement d'air D peut également et éventuellement comprendre des moyens de chauffage MC logés dans le (chaque) réservoir RL et agencés de manière à chauffer le liquide stocké pendant une durée choisie de manière à l'assainir avant qu'il n'alimente l'élément EP. Par exemple, ces moyens de chauffage MC peuvent être agencés sous la forme d'au moins une résistance électrique de chauffage (par exemple de type CTP (éventuellement de 20 W pour obtenir un échauffement d'environ 80°)). La durée de fonctionnement de ces moyens de chauffage MC peut être, par exemple, comprise entre environ 30 secondes et environ 2 minutes. Par exemple elle est choisie égale à environ 1 minute.

Cette option de chauffage peut être également envisagée dans les premier et deuxième exemples de réalisation.

D'autres agencements que ceux décrits ci-avant peuvent être envisagés. Ainsi, la seconde sortie S2 pourrait déboucher dans le conduit CA en amont de sa première sortie S1 (mais de préférence au voisinage de cette dernière (S1)).

On notera que dans les exemples de réalisation non limitatifs illustrés sur les figures 1 à 3, le dispositif de traitement d'air D ne comprend qu'un seul élément EP du fait qu'il ne comprend qu'une seule première sortie S1 située à l'extrémité aval d'un unique conduit CA. Mais il pourrait comporter plusieurs éléments EP associés respectivement à plusieurs premières sorties S1 communiquant (directement ou indirectement) avec l'enceinte H (en plusieurs endroits choisis) et constituant les extrémités aval de plusieurs ramifications d'un unique conduit CA ou bien de plusieurs conduits CA.

On notera également que dans les exemples de réalisation non limitatifs illustrés sur les figures 1 à 3, le conduit CA communique indirectement avec l'enceinte H via un aérateur (ou dispositif de distribution d'air) AE qui est couplé à sa première sortie S1 (en aval de cette dernière) et au plafonnier PV et qui comprend, par exemple, une ou plusieurs ailettes AA orientables de manière à permettre le contrôle manuel par un usager de la direction suivant laquelle le flux d'air traité doit pénétrer dans l'enceinte H et/ou le débit de ce flux d'air traité. Mais dans une variante de réalisation la première sortie S1 pourrait communiquer directement avec l'enceinte H.

Le liquide qui alimente le (chaque) tuyau TA est issu d'au moins un réservoir RL qui fait éventuellement partie des moyens de production MP du dispositif de traitement d'air D. Cette alimentation peut se faire soit indirectement au moyen d'une pompe électrique PE, comme dans les premier et deuxième exemples de réalisation illustrés respectivement sur les figures 1 et 2, soit directement par gravité comme dans le troisième exemple de réalisation illustré sur la figure 3. Dans la première hypothèse, le (chaque) réservoir RL peut être relativement éloigné de l'élément EP et situé à un niveau supérieur ou inférieur au niveau où est placée l'entrée de ce dernier (EP). En revanche, dans la seconde hypothèse, le (chaque) réservoir RL doit être situé à un niveau supérieur au niveau où est placée l'entrée de l'élément EP pour que l'alimentation par gravité puisse se faire.

Le liquide qui est stocké dans un réservoir RL et qui est destiné à être mélangé au flux d'air F1 pour le rafraîchir peut, par exemple, être de l'eau (de préférence minérale), éventuellement additionnée d'une fragrance destinée à parfumer l'enceinte H ou bien d'un désinfectant destiné à assainir l'enceinte H.

On notera qu'un réservoir RL peut, par exemple, se présenter sous la forme d'un réceptacle que l'on doit remplir régulièrement et/ou qui est alimenté en condensats collectés dans le compartiment moteur du véhicule. Mais il pourrait également s'agir d'une cartouche amovible constituant un consommable et initialement munie d'un opercule d'obturation déchirable ou perforable.

Lorsque plusieurs réservoirs RL sont utilisés pour alimenter en liquide(s) (éventuellement différents) le (chaque) tuyau TA, ce dernier (TA) peut comporter une entrée connectée à un connecteur comprenant une sortie et N entrées couplées à des électrovannes permettant de sélectionner le réservoir RL que l'on souhaite utiliser à l'instant considéré.

L'alimentation en courant des moyens de production MP peut, par exemple, se faire via un câble électrique (non représenté) qui est connecté (ici) au réseau électrique du véhicule. Mais elle pourrait également se faire via une batterie indépendante, comme par exemple une pile.

Le flux d'air F1 qui alimente le (chaque) conduit CA peut, par exemple, être fourni par un pulseur (non représenté) qui fait éventuellement partie du dispositif de traitement d'air D et qui aspire de l'air dans l'habitacle H ou dans le compartiment moteur. Mais dans une variante de réalisation, ce flux d'air F1 pourrait être fourni par une sortie (éventuellement dédiée) d'une installation de climatisation faisant partie du système comportant l'enceinte H (ici un véhicule) et chargée de contrôler l'aérothermie de cette enceinte H. L'alimentation en courant de l'éventuel pulseur peut, par exemple, se faire via un câble électrique (non représenté) qui est connecté (ici) au réseau électrique du véhicule. Mais elle pourrait également se faire via une batterie indépendante, comme par exemple une pile.

La source de lumière SL du dispositif de traitement d'air D est agencée de manière à éclairer une partie au moins du flux d'air traité F2 dans l'enceinte H. Plus précisément, la source de lumière SL est agencée de manière à délivrer des photons qui présentent une couleur représentative d'au moins un paramètre climatique de l'enceinte H et/ou qui définissent une image contenant au moins une information relative au système (ici un véhicule).

De préférence, chaque information relative au système est choisie parmi au moins un paramètre climatique de l'enceinte, un nombre de kilomètres restant à parcourir avant l'arrivée à une destination prévue (dans le cas d'un véhicule), une date (courante) et un horaire (courant).

De préférence, chaque paramètre climatique est choisi parmi au moins le degré (ou taux) d'humidité dans l'enceinte H et la température dans l'enceinte H. Les valeurs de ces paramètres climatiques sont généralement disponibles dans un véhicule (ou un système) comprenant une installation de climatisation, car ils sont utilisés pour réguler l'air ambiant. On notera que le choix de la couleur des photons d'éclairement et/ou de chaque information relative au système est assuré par des moyens de contrôle (non illustrés) qui font éventuellement partie du dispositif de traitement d'air D et qui contrôlent le fonctionnement de la source de lumière SL en fonction des valeurs de chaque paramètre climatique concerné.

Par exemple, lorsque la température dans l'habitacle H est froide la couleur des photons générés peut être bleue, lorsque la température dans l'habitacle H est mitigée la couleur des photons générés peut être orange, et lorsque la température dans l'habitacle H est chaude la couleur des photons générés peut être rouge. Bien entendu, des nuances de ces couleurs peuvent être utilisées pour améliorer la précision de l'information climatique qui est fournie au(x) passager(s).

On notera que l'interaction des photons « colorés » avec les petites gouttes adjointes au flux d'air donne l'impression que le flux d'air traité est coloré, avec un aspect « cotonneux ». Cela permet avantageusement de créer un effet de style lumineux et donc une ambiance lumineuse, avec un éventuel effet apaisant (ou de bien-être), dans la partie de l'habitacle H qui reçoit le flux d'air traité F2 et qui est éclairée par la source de lumière SL.

En variante ou en complément de la coloration, l'image générée par la source de lumière SL peut représenter la valeur de la température dans l'habitacle H et/ou le degré (ou taux) d'hygrométrie dans l'habitacle H et/ou le nombre de kilomètres restant à parcourir et/ou la date et/ou l'horaire. Chaque valeur peut être affichée sur le flux d'air traité F2 (grâce à la présence des petites gouttes) soit dans une unique couleur prédéterminée, soit dans une couleur qui dépend de sa grandeur ou de l'intervalle auquel elle appartient.

On notera que lorsque la source de lumière SL génère des images, il n'est pas obligatoire qu'elle assure également une coloration du flux d'air traité F2. Par ailleurs, lorsqu'elle assure cette coloration en complément, il n'est pas obligatoire que cette coloration soit représentative d'au moins un paramètre climatique de l'enceinte H. Cette coloration peut en effet être fixe et prédéterminée ou bien variable selon le mode de réalisation choisi par le constructeur ou selon l'éventuelle programmation effectuée par l'usager. On peut ainsi envisager la mise à disposition d'une combinaison de couleurs, par exemple pour induire un effet de type « arc-en-ciel ».

Afin de permettre l'obtention de différentes couleurs, la source de lumière SL peut, par exemple, comprendre au moins un ensemble de diodes électroluminescentes (ou LEDs) émettant respectivement selon des couleurs différentes, ou capables chacune d'émettre des photons de différentes couleurs, ou bien au moins un ensemble d'au moins une diode électroluminescente (ou LED) émettant selon une unique couleur et couplé à au moins un masque de couleur(s) (par exemple bleu et rouge) déplaçable en fonction de la couleur finale choisie avec la couleur souhaité devant l'ensemble de LED(s).

Par ailleurs, pour permettre la génération des images avec leur(s) information(s), éventuellement climatique(s), la source de lumière SL peut, par exemple, comprendre un pico-projecteur ou bien au moins un ensemble d'au moins une diode électroluminescente (ou LED) couplé à au moins un masque déplaçable devant lui en fonction de chaque information choisie. Le (chaque) masque comporte alors des informations gravées ou imprimées, et, lorsque la lumière passe au travers d'une information gravée ou imprimée, cela induit sa projection sur le flux d'air traité F2.

Comme indiqué plus haut, et comme illustré sur la figure 1, le dispositif de traitement d'air D peut comprendre au moins un aérateur AE propre à être couplé à la première sortie S1 (ici du conduit CA) et comportant au moins une première partie P1 de la source de lumière SL propre à délivrer des photons qui présentent la couleur représentative d'au moins un paramètre climatique de l'enceinte H.

Dans l'exemple non limitatif illustré sur la figure 1, la première partie P1 de la source de lumière SL est solidarisée à la pièce centrale PC de l'aérateur AE. Elle est plus précisément logée dans la portion creuse de cette pièce centrale PC à côté de l'élément EP. Par exemple, cette première partie P1 peut occuper tout ou partie d'une zone annulaire entourant l'élément EP, afin d'éclairer de façon sensiblement homogène tout le flux d'air traité F2.

En variante ou en complément, la première partie P1 de la source de lumière SL pourrait être installée dans au moins une portion d'une partie périphérique de l'aérateur AE.

La source de lumière SL peut comprendre une seconde partie P2 propre à délivrer des photons définissant une image contenant chaque information relative au système, éventuellement à son enceinte H. Cette seconde partie P2 peut être installée au voisinage de la sortie S1, par exemple à côté d'une première partie P1 ou bien à la place de la première partie P1. Mais, comme illustré non limitativement sur les figures 2 et 3, il est plus avantageux qu'elle soit éloignée de l'élément EP afin que l'image projetée sur les petites gouttes soit de meilleure qualité. A cet effet, et comme illustré, la seconde partie P2 peut être solidarisée au plafonnier PV, qui est lui-même solidarisé au toit (ou pavillon), par exemple au voisinage de l'aérateur AE. En variante, la seconde partie P2 pourrait être solidarisée à une partie supérieure d'au moins une porte du véhicule. Dans une autre variante (non représentée), la seconde partie P2 pourrait être solidarisée à une partie périphérique de l'aérateur AE.

Dans les exemples non limitatifs illustrés sur les figures 2 et 3, le dispositif de traitement d'air D comprend au moins un aérateur AE couplé à la première sortie S1 (ici) du conduit CA, et la source de lumière SL est intégralement installée au voisinage de cet aérateur AE. A cet effet, et comme illustré, la source de lumière SL peut être solidarisée au plafonnier PV, qui est lui-même solidarisé au toit (ou pavillon), au voisinage de l'aérateur AE. En variante, la source de lumière SL pourrait être solidarisée à une partie supérieure d'au moins une porte du véhicule. On notera que dans les variantes de réalisation illustrées sur les figures 2 et 3, la source de lumière SL peut comprendre soit seulement une première partie P1, soit seulement une seconde partie P2, soit encore des première P1 et seconde P2 parties.

On notera également que la source de lumière SL peut éventuellement n'être mise en fonctionnement qu'à condition que l'intensité lumineuse soit inférieure à un seuil prédéfini.

On notera également que lorsque le dispositif de traitement d'air D est indépendant d'une installation de climatisation, il est mis en marche de façon indépendante. En revanche, lorsque le dispositif de traitement d'air D fait partie d'une installation de climatisation, il peut être mis en marche automatiquement par les moyens de contrôle de l'installation ou par sélection par un usager du système de la fonction de traitement d'air assurée par le dispositif de traitement d'air D (ici la nébulisation).

## Revendications

1. Véhicule possédant un habitacle (H), comprenant en outre au moins un dispositif de traitement d'air (D), ledit dispositif (D) comprenant une source de lumière propre à éclairer les buses de sortie d'air dans l'habitacle, ladite source de lumière étant apte à délivrer des photons définissant une image contenant une information relative au véhicule, ledit véhicule étant **caractérisé en ce que** ledit dispositif (D) comprend des moyens de production (MP) propres à produire pour ledit habitacle (H) un flux d'air traité par adjonction de petites gouttes de liquide, et une source de lumière (SL) propre à éclairer une partie au moins dudit flux d'air traité dans ledit habitacle (H).

2. Véhicule selon la revendication 1, **caractérisé en ce que** ladite image contient au moins une information choisie dans un groupe comprenant un paramètre climatique de l'habitacle (H), un nombre de kilomètres restant à parcourir par le véhicule, une date et un horaire.

3. Véhicule selon l'une des revendications 1 et 2, **caractérisé en ce que** chaque paramètre climatique est choisi dans un groupe comprenant un degré d'humidité dans ledit habitacle (H) et une température dans ledit habitacle (H).

4. Véhicule selon l'une des revendications 1 à 3, **caractérisé en ce qu'**il comprend au moins un aérateur (AE) propre à être couplé à une sortie (S1) d'alimentation dudit habitacle (H) et comportant au moins une première partie (P1) de ladite source de lumière (SL) propre à délivrer des photons présentant ladite couleur représentative d'au moins un paramètre climatique dudit habitacle (H).

5. Véhicule selon la revendication 4, **caractérisé en ce que** ladite première partie (P1) de la source de lumière (SL) est installée dans une partie centrale (PC) dudit aérateur (AE) et/ou dans au moins une portion d'une partie périphérique dudit aérateur (AE).

6. Véhicule selon l'une des revendications 4 et 5, **caractérisé en ce que** ledit aérateur (AE) comprend une partie périphérique munie d'une seconde partie (P2) de ladite source de lumière (SL) propre à délivrer des photons définissant une image contenant chaque information.

7. Véhicule selon l'une des revendications 1 à 3, **caractérisé en ce qu'**il comprend au moins un aérateur (AE) propre à être couplé à une sortie (S1) d'alimentation dudit habitacle (H), et **en ce que** ladite source de lumière (SL) est propre à être installée au voisinage dudit aérateur (AE).

8. Véhicule selon l'une des revendications 1 à 7, **caractérisé en ce que** lesdits moyens de production (MP) sont agencés pour transformer un liquide en petites gouttes au moyen d'une technique choisie dans un groupe comprenant la nébulisation, la brumisation et la pulvérisation.

## Patentansprüche

1. Fahrzeug, das einen Fahrgastraum (H) besitzt, das außerdem mindestens eine Luftbehandlungsvorrichtung (D) umfasst, wobei die Vorrichtung (D) eine Lichtquelle umfasst, die geeignet ist, Luftausgangsdüsen in dem Fahrgastraum zu beleuchten, wobei die Lichtquelle geeignet ist, Photonen zu liefern, die ein Bild definieren, das eine Information in Bezug auf das Fahrzeug enthält, Fahrzeug **dadurch gekennzeichnet, dass** die Vorrichtung (D) Produktionsmittel (MP) umfasst, die geeignet sind, um für den Fahrgastraum (H) einen behandelten Luftstrom durch Hinzufügen kleiner Flüssigkeitstropfen zu erzeugen, und eine Lichtquelle (SL), die geeignet ist, um mindestens einen Teil des behandelten Luftflusses in dem Fahrgastraum (H) zu beleuchten.

2. Fahrzeug nach Anspruch 1, **dadurch gekennzeichnet, dass** das Bild mindestens eine Information enthält, die aus einer Gruppe ausgewählt ist, die einen Klimaparameter des Fahrgastraums (H), eine Anzahl von Kilometern, die das Fahrzeug noch zurückzulegen hat, ein Datum und eine Uhrzeit umfasst.

3. Fahrzeug nach einem der Ansprüche 1 und 2, **dadurch gekennzeichnet, dass** jeder Klimaparameter aus einer Gruppe ausgewählt ist, die einen Feuchtigkeitsgrad in dem Fahrgastraum (H) und eine Temperatur in dem Fahrgastraum (H) umfasst.

4. Fahrzeug nach einem der Ansprüche 1 bis 3, **dadurch gekennzeichnet, dass** es mindestens einen Lüfter (AE) umfasst, der geeignet ist, um mit einem Versorgungsausgang (S1) des Fahrgastraums (H) gekoppelt zu sein, und mindestens einen ersten Teil (P1) der Lichtquelle (SL) umfasst, der geeignet ist, Photonen zu liefern, die die Farbe aufweisen, die für mindestens einen Klimaparameter des Fahrgastraums (H) repräsentativ ist.

5. Fahrzeug nach Anspruch 4, **dadurch gekennzeichnet, dass** der erste Teil (P1) der Lichtquelle (SL) in einem zentralen Teil (PC) des Lüfters (AE) und/oder in mindestens einem Abschnitt eines Umfangsteils des Lüfters (AE) installiert ist.

6. Fahrzeug nach einem der Ansprüche 4 und 5, **dadurch gekennzeichnet, dass** der Lüfter (AE) einen Umfangsteil umfasst, der mit einem zweiten Teil (P2) der Lichtquelle (SL) versehen ist, der geeignet ist, Photonen, die ein Bild definieren, das jede Information enthält, abzugeben.

7. Fahrzeug nach einem der Ansprüche 1 bis 3, **dadurch gekennzeichnet, dass** es mindestens einen Lüfter (AE) umfasst, der geeignet ist, mit einem Versorgungsausgang (S1) des Fahrgastraums (H) gekoppelt zu sein, und dass die Lichtquelle (SL) geeignet ist, in der Nähe des Lüfters (AE) installiert zu sein.

8. Fahrzeug nach einem der Ansprüche 1 bis 7, **dadurch gekennzeichnet, dass** die Produktionsmittel (MP) eingerichtet sind, um eine Flüssigkeit in kleine Tropfen mittels einer Technik umzuwandeln, die aus einer Gruppe ausgewählt ist, die Zerstäubung, Atomisierung und Sprühen umfasst.

## Claims

1. A vehicle having a passenger compartment (H), further including at least one air treatment device (D), said device (D) including a light source suitable for illuminating the air outlet nozzles in the passenger compartment, said light source being able to deliver photons defining an image containing information relating to the vehicle, said vehicle being **characterized in that** said device (D) includes production means (MP) suitable for producing for said passenger compartment (H) an air flow treated by the addition of small drops of liquid, and a light source (SL) suitable for illuminating at least a part of said treated air flow in said passenger compartment (H).

2. The vehicle according to Claim 1, **characterized in that** said image contains at least one information item selected from a group including a climate parameter of the passenger compartment (H), a number of kilometres remaining to be travelled by the vehicle, a date and a schedule.

3. The vehicle according to one of Claims 1 and 2, **characterized in that** each climate parameter is selected from a group including a degree of humidity in said passenger compartment (H) and a temperature in said passenger compartment (H).

4. The vehicle according to one of Claims 1 to 3, **characterized in that** it includes at least one aerator (AE) suitable to be coupled to a supply outlet (S1) of said passenger compartment (H) and comprising at least a first part (P1) of said light source (SL) suitable to deliver photons presenting said colour representative of at least one climate parameter of said passenger compartment (H).

5. The vehicle according to Claim 4, **characterized in that** said first part (P1) of the light source (SL) is installed in a central part (PC) of said aerator (AE) and/or in at least a portion of a peripheral part of said aerator (AE).

6. The vehicle according to one of Claims 4 and 5, **characterized in that** said aerator (AE) includes a peripheral part provided with a second part (P2) of said light source (SL) suitable to deliver photons defining an image containing each item of information.

7. The vehicle according to one of Claims 1 to 3, **characterized in that** it includes at least one aerator (AE) suitable to be coupled to a supply outlet (S1) of said passenger compartment (H), and **in that** said light source (SL) is suitable to be installed in the vicinity of said aerator (AE).

8. The vehicle according to one of Claims 1 to 7, **characterized in that** said production means (MP) are arranged to transform a liquid into small drops by means of a technique selected from a group including nebulising, misting and spraying.
